# EUROPEAN PATENT APPLICATION

(11) **EP 2 363 613 A1**
(43) Date of publication of application: **07.09.2011**
(21) Application number: 11151062.4
(22) Date of filing: 17.01.2011
(51) Int. Cl.: F16D 55/224

(54) **Disk brake with brake release**

(30) Priority: 11.02.2010 PL 39041810
(71) Applicant: Linter Spolka z ograniczona odpowiedzialnoscia, 32-340 Wolbrom (PL)
(72) Inventor: Marciniak, Zbyszek, 97-300 Piotrkow Trybunalski (PL)
(74) Representative: Hudy, Ludwik

(57) **Abstract**

In a disk brake with brake release comprising a bottom support plate of the brake, to which an external second-order lever (20) and an internal second-order lever (30) are mounted provided with brake shoes having brake blocks between which a disk (80) is located, whereby to the disk (80), the brake blocks are pressed by a force generated by a spring situated in a cylinder of a brake actuator (50) with a movable guide joined with a piston rod having a free end shaped as a lug, the lug of the piston rod of the brake actuator (50) is attached to an external second-order lever (20) by means of an articulated joint and the brake actuator (50) has housing spherical elements shaped so as to match a ball-shaped space (45) formed within a fastening set (40) that is attached to a free end of the internal second-order lever (30).

## Description

The present invention concerns to a disk brake with a brake release applied in drives of continuous conveyance systems.

Basically, any braking system consists of two major mechanisms: a braking mechanism that directly impacts or acts on moving or rotating elements and slows their rotation and a mechanism or system actuating the brakes. The following types of brake actuating mechanisms or systems are known: mechanical, hydraulic, pneumatic, electrical and their combination, whereby the combined mechanism/system is any configuration thereof. The moving element impacted by the braking system is usually constructed as a drum or disk. Owing to the low compressibility of fluids, the hydraulic braking system is equipped with a hydraulic braking mechanism characterized by a short actuation time and its construction is relatively simple.

One of the known disk brake solutions is disclosed in the Polish patent application No. P-369787 titled "Disk brake to be applied in automobile braking systems". In the above mentioned solution, there is at least one brake caliper to clamp a brake disk that is rigidly joined with the vehicle's wheel. The calliper according to the above invention has a case with at least one opening to place a system of pistons, which press brake pads to the brake disk. The brake pads are situated in the brake calliper on the both sides of the disk.

In the engineering technology of drives of continuous conveyance systems, for example of transporters, one solution is known of a disk brake with a brake release. This solution is shown on webpage www.fena.pl of the company Fena Ltd. Co, Poland. The solution cited comprises a bottom plate of the brake. To this plate, two levers are mounted, namely an external second-order lever and an internal second-order lever with brake shoes with brake blocks. Between the brake shoes a disk is situated. To this disk, brake blocks are pressed by a force generated by a spring in a cylinder of the brake actuator with a movable guide joined with a piston rod. The external second-order lever and the internal second-order lever are joined with a multi-lever assembly. At the end of the last lever, a brake release or a hydraulic cylinder are held whereby the second end of the brake release or a hydraulic cylinder is usually shaped as a lug and secured to a supporting structure. The levers are joined by many joints, therefore, the actuation time of such a brake is extended by the time necessary to eliminate plays between levers.

According to the present invention, the disk brake with the brake release comprises a bottom support plate of the brake to which an external second-order and an internal second-order lever is mounted that have brake shoes comprising brake blocks between which a disk is located. To this disk, the brake blocks are pressed by a force generated by a spring situated in a cylinder of a brake actuator with a movable guide joined with a piston rod. The piston rod's free end is shaped as a lug. The lug of the brake actuator's piston rod is likewise fastened by a articulated joint to the free end of the external second-order lever. The brake actuator has spherical elements of the shapes, which match the ball-shaped space formed in the fastening set attached to the free end of the internal second-order lever.

Preferably, the spherical elements are shaped on the frontal part of the front cover and on the ring of the hydraulic actuator's cylinder. Preferably, the ball-shaped space formed in the fastening set is held by a spherical recess, its radius of curvature being R1, of a cylindrical pocket joined with a bush, as well as by a spherical recess, its radius of curvature being R1, of a ring-shaped insert seated in the bush from the side of the bush's free end.

Preferably, the spherical elements shaped on the front part of the front cover and on the ring of the hydraulic actuator's cylinder, as well as the ball-shaped space formed in the fastening set create a ball-shaped joint; and using this joint, the hydraulic actuator is fastened to the internal lever.

Preferably, both the external, second-order and the internal, second-order levers are constructed of two flat bars connected using angle bars whereas the two ends of each lever's flat bars hold an external bracket of the bottom plate, in the place, where the said plate is fastened to the bottom plate of the brake.

Preferably, the external, second-order and the internal, second-order levers are equipped with a brake shoe position control system; this control system controls the shoe position relatively to the disk and the two-order lever onto which this shoe is mounted.

Preferably, the external second-order and the internal, second-order levers are equipped with a lever position control system; this control system controls the lever position relatively to the disk and to the bottom plate of the brake.

Preferably, the external, second-order and the internal, second-order levers are equipped with at least one shoe made of rectangular socket with a plate; to this plate, the brake blocks are fastened using bolts.

The invention will now be described by way of example and with reference to the accompanying drawings in which:
Fig. 1 shows a front view of the disk brake with the brake release;
Fig. 2 shows a side view of the disk brake with the brake release;
Fig. 3 shows a cross section of the brake actuator or a brake hydraulic cylinder with a mounting system.

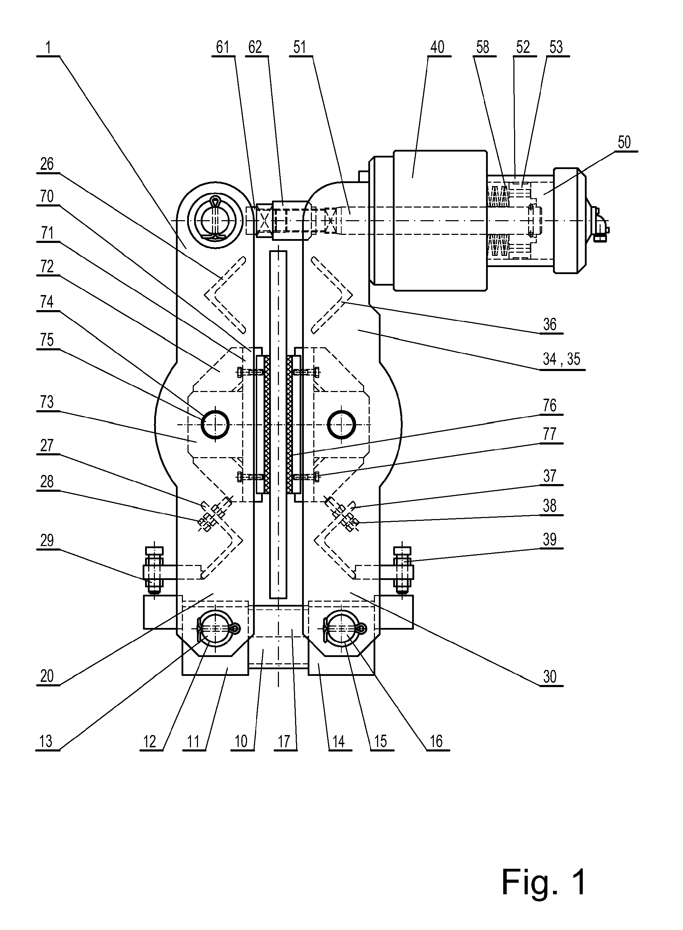

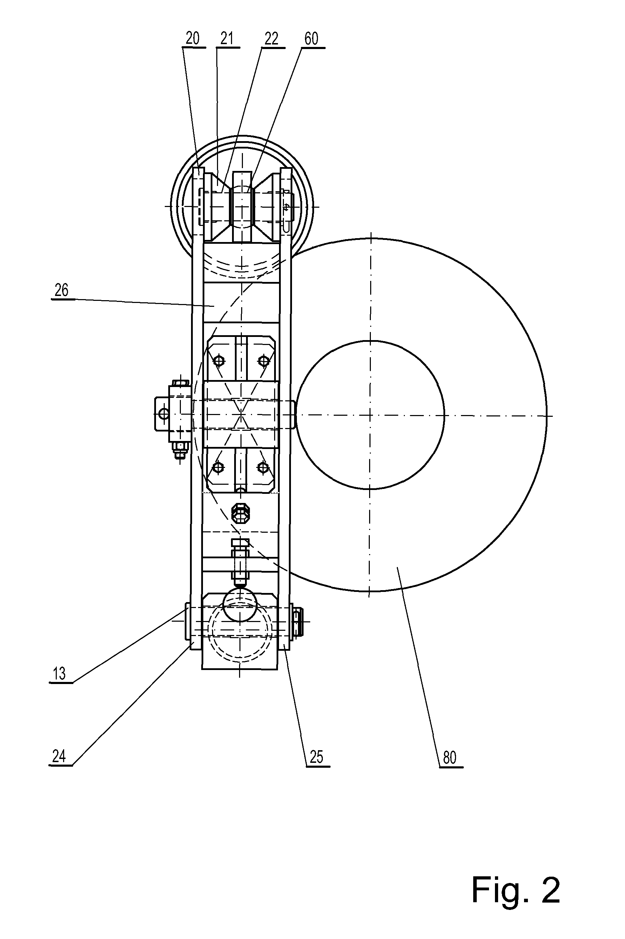

The disk brake 1 with the brake release, as presented in Fig. 1, 2, and 3, has a hydraulic braking system that cooperates with braking elements. These braking elements impact or act on the moving element, i.e. a brake disk to which the brake blocks or shoes are pressed. Essentially, the disk brake 1 comprises one bottom support plate 10 of the brake, to which one end of the external lever 20 and one end of the internal lever 30 are fastened by an articulated joint. The second end of the internal lever 30 is free, and, here, there is a fastening set 40, in which a hydraulic actuator or hydraulic cylinder 50 is secured. On the second end of the external lever 20, a reinforcing conic element 21 with an opening 22 is situated. In this opening, a pin 23 is placed. The pin 23 passes through a lug 60 attached to the piston rod 51 of the hydraulic actuator 50. A brake shoe 70 is positioned on each of the external lever 20 and the internal lever 30 by means of a pin 75. On the end part of the brake shoe 70, there is a brake block 76 which is situated at the side facing the disk 80.

The bottom support plate 10 of the brake comprises an external bracket 11 with an opening 12. In the opening 12, a pin 13 with a head is secured. Additionally, the bottom support plate 10 of the brake has an internal bracket 14 with an opening 15 in which a pin 16 with a head is secured.

The external bracket 11 and the internal bracket 14 are joined together using a structural section 17.

The external lever 20 is a second-order lever or a single-arm lever and is made of two flat bars 24 and 25 joined together by an upper angle bar 26 and a lower angle bar 27 with the control system 28 of the position of the brake shoe 70 in relation to the external lever 20. The brake shoe control system 28 consists of a set of screws bolts and locknuts. Moreover, the flat bars 24 and 25 are connected, using connectors, with the control system 29 of the position of the external lever 20 as regards the bottom support plate 10 of the brake. This control system 29 consists of a bolt and locknuts. The lower ends of the flat bars 24 and 25 of the external lever 20 hold the external bracket 11, with an opening 12, of the bottom support plate 10, in the place, where the lever is fastened to the bottom support plate 10 of the brake. The lever 20 is fastened pivotally, in a self-aligning manner, to the bottom support plate 10 of the brake using the pin 13 with the head that passes through the opening in the flat bars 24 and 25 and the opening 12 in the external bracket 11 of the bottom support plate 10 of the brake. To each flat bars 24 and 25, a reinforcing conical element 21 with an opening 22 is attached. A pin 23 passes through the opening 22. The pin 23 also passes through a lug 60 with a threaded mandrel 61 connected with the piston rod 51 of the brake actuator 50 using a threaded bush 62. The lug of the piston rod of the brake actuator 50 is attached to the external lever 20 by means of an articulated joint.

Similar to the external lever 20, also, the internal lever 30 is a second-order lever or a single-arm lever that is made of flat bars 34 and 35, joined together with an upper angle bar 36 and a lower angle bar 37 with the control system 38 of the position of the brake shoe 70. The brake shoe control system 38 consists of a set of bolts and locknuts. Moreover, the flat bars 34 and 35 are connected, using connectors, with the control system 39 of the position of the internal lever 30 as regards the bottom support plate 10 of the brake. This control system 39 consists of a bolt and locknuts. The lower ends of the flat bars 34 and 35 of the internal lever 30 hold the external bracket 14, with an opening 15, of the bottom support plate 10, in the place, where the lever is fastened to the bottom support plate 10 of the brake. The bottom support plate 10 of the brake is immovable. The internal lever 30 is fastened pivotally, in a self-aligning manner, to the bottom support plate 10 of the brake using the pin 16 with the head. The pin 16 passes through the openings in the flat bars 34 and 35 and the opening 15 in the external bracket 14 of the bottom support plate 10 of the brake.

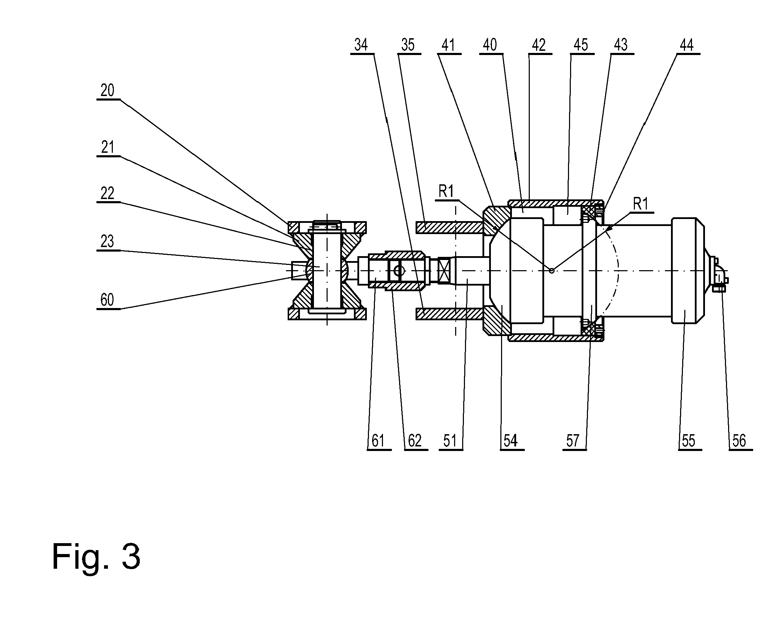

A fastening set 40 is attached to the flat bars 34 and 35.This set involves a ball-shaped space with its midpoint situated within the symmetry axis of the hydraulic cylinder or hydraulic actuator 50. The fastening set 40, represented in details in Fig. 3, comprises a cylindrical seat 41 with a spherical recess of an R1 curvature radius. This seat is joined with a bush 42. At one end of the bush 42, there is a ring-shaped insert 43 with a spherical recess of an R1 curvature radius. The insert 43 is fastened in the bush 42 using a ring 44 with a male thread matching a female thread of the bush 42. The centre of the curvature R1 of the spherical recess in the cylindrical seat 41 and of the recess in the insert 43 is within the symmetry axis of the brake actuator 50, which is mounted within the ball-shaped space 45. The two facing each other caps are formed by the spherical recess of the cylindrical seat 41 and the spherical recess of the insert 43. The housing spherical elements shaped on the frontal part of the front cover 54 and on the ring 57 of the cylinder 52 of the hydraulic actuator 50, as well as the ball-shaped space 45, formed in the fastening set 40, create together a ball-shaped joint. This joint is an articulated joint. The housing spherical elements are surrounded by the spherical recess of an R1 curvature radius of the cylindrical seat 41 joined with a bush 42 and by the spherical recess of an R1 curvature radius of a ring-shaped insert 43. Using this ball-shaped joint, the hydraulic actuator 50 is fastened to the internal lever 30. One part of the ball-shaped joint is attached to the internal second-order lever, and the second part is attached to the hydraulic actuator. Owing to the ball-shaped joint, the construction of the entire brake is very compact with the fastening joint of the actuator situated within its contour.

Beside the piston rod 51, the hydraulic actuator 50 also has a cylinder 52. In the cylinder 52, a guide 53 is joined with the piston rod 51. Additionally, the hydraulic actuator 50 has a front cover 54 with an opening and a rear cover 55 with a connecting element 56. Between the front cover 54 and the guide 53, there is a disk spring 58 that generates a force to press the brake blocks to the brake disk. The front part of the front cover 54, viewing from the side where one part of the piston rod 51 protrudes, is shaped as a spherical element or a spherical cap. The shape of the spherical element or cap matches the shape of the spherical recess of the cylindrical seat 41. What is more, a ring 57 is attached to the cylinder 52. The external surface of the ring 57 is shaped as a spherical element or a spherical cap's segment and the shape of this element or segment matches the shape of the recess in the insert 43.

The brake shoe 70 is made of a rectangular seat 73 with an opening 74. In the opening 74, there is a pin 75 of the brake shoe 70. To the side parts of the seat 73, ribs 72 are attached. They are connected with a plate 71. To the plate 71, brake blocks 76 are fastened using bolts 77. The symmetry centre of the brake blocks 76 lies within the line perpendicular to the disk 80 and crossing the symmetry axis thereof. At least one shoe 70 is placed in a self-aligning manner with the use of pins 75 situated between the flat bars of both the external second-order lever 20 and the internal second-order lever 30. Both the axes of the pins 13 and 16 with heads secured in the bottom plate 10 and the axes of the pins 75, used to fix the brake shoes 70 are situated in parallel to the plane of the brake disk 80. In this way, it is secured that the brake blocks 76 adheres the brake disk 80 with their entire surface.

## Claims

1. A disk brake with brake release comprising a bottom support plate of the brake, to which an external second-order lever and an internal second-order lever are mounted provided with brake shoes having brake blocks between which a disk is located, whereby to the disk the brake blocks are pressed by a force generated by a spring situated in a cylinder of a brake actuator with a movable guide joined with a piston rod having a free end shaped as a lug **characterised in that** the lug of the piston rod of the brake actuator (50) is attached to an external second-order lever (20) by means of an articulated joint and the brake actuator (50) has housing spherical elements shaped so as to match a ball-shaped space (45) formed within a fastening set (40) that is attached to a free end of the internal second-order lever (30).

2. The disk brake with the brake release according to claim 1, **characterised in that** the housing spherical elements are formed on both the front part of the front cover (54) and on the ring (57) of a cylinder (52) of the hydraulic actuator (50) and the ball-shaped space (45) formed in the fastening set (40) is surrounded by a spherical recess of an R1 curvature radius of a cylindrical seat (41) joined with a bush (42) and by the spherical recess of an R1 curvature radius of a ring-shaped insert (43) secured in the bush (42) on its free end.

3. The disk brake with the brake release according to claim 1, **characterised in that** the housing spherical elements formed on the front part of the front cover (54) and on the ring (57) of the cylinder (52) of the hydraulic actuator (50) and the spherical space formed within the fastening set (40) form a ball-shaped joint by which the hydraulic actuator (50) is fastened to the internal lever (30).

4. The disk brake with the brake release according to claim 1, **characterised in that** the external second-order lever (20) and the internal second-order lever (30) are created by two flat bars (24 and 25), (34 and 35) connected using angle bars (26 and 27), (36 and 37), whereas the lower ends of the flat bars (24 and 25), (34 and 35) of each of the levers hold the external bracket (11), (14) of the bottom support plate (10), in the place, where the lower ends of the flat bars (24 and 25), (34 and 35) are mounted pivotally to the bottom support plate (10).

5. The disk brake with the brake release according to claim 1, **characterised in that** the external second-order lever (20) and the internal second-order lever (30) are equipped with a control system (38) to control the position of the shoe (70) relative to the brake disk and to the second-order lever, to which the shoe is secured.

6. The disk brake with the brake release according to claim 1, **characterised in that** the external second-order lever (20) and the internal second-order lever (30) are equipped with a control system (39) to control the position of the lever relative to the brake disk and to the bottom support plate (10) of the brake.

7. The disk brake with the brake release according to claim 1, **characterised in that** the external second-order lever (20) and the internal second-order lever (30) are equipped with at least one shoe (70) made of a rectangular seat (73) with a plate (71), to which brake blocks (76) are fastened using bolts (77).
